(19) Europäisches Patentamt
European Patent Office
Office européen des brevets

(11) **EP 2 747 306 A1**

(12) **EUROPEAN PATENT APPLICATION**
published in accordance with Art. 153(4) EPC

(43) Date of publication:
**25.06.2014 Bulletin 2014/26**

(21) Application number: **11865110.8**

(22) Date of filing: **26.12.2011**

(51) Int Cl.:
**H04B 7/26** (2006.01)

(86) International application number:
**PCT/CN2011/084697**

(87) International publication number:
**WO 2012/152036 (15.11.2012 Gazette 2012/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2011 CN 201110233284**

(71) Applicant: **ZTE Corporation**
**Shenzhen, Guangdong 518057 (CN)**

(72) Inventors:
• **LI, Yong**
**Shenzhen, Guangdong 518057 (CN)**
• **DAI, Bo**
**Shenzhen, Guangdong 518057 (CN)**

(74) Representative: **Mozzi, Matteo et al**
**Jacobacci & Partners S.p.A.**
**Via Senato, 8**
**20121 Milano (IT)**

(54) **METHOD AND DEVICE FOR INDICATING CONTROL CHANNEL**

(57) Disclosed are a method and device for indicating a control channel. The method for indicating a control channel includes: channelization processing is performed on indication information indicating the control channel, wherein the control channel is a newly added control channel area or a control channel on a resource which is newly carved out of resources reserved for PDSCH and is for transmitting control information; and the processed indication information is sent to UE. By applying the present invention, the current problem that the UE cannot detect the newly added downlink control channel can be solved.

```
┌─────────────────────────────────────────────┐
│  channelization processing is performed on   │ ─── S 102
│  indication information indicating the        │
│  control channel                              │
└─────────────────────────────────────────────┘
                      │
                      ▼
┌─────────────────────────────────────────────┐
│  the processed indication information is      │ ─── S 104
│  sent to the user equipment                   │
└─────────────────────────────────────────────┘
```

**Fig. 1**

EP 2 747 306 A1

**Description**

**Technical Field**

The present invention relates to the communication field, in particular to a method and device for indicating a control channel.

**Background**

There are two kinds of frame structures in a Long Term Evolution (LTE) system, frame structure Type 1 is applicable to Frequency Division Duplex (FDD) and Frequency Division half-Duplex. Each radio frame has a length of 10 ms and is composed of 20 time slots; each time slot is 0.5 ms, numbered 0 to 19. One subframe is composed by two continuous time slots, for example, subframe i is composed by two continuous time slots 2i and 2i + 1. Whether half-duplex FDD or full-duplex FDD, uplink data and downlink data is both transmitted on different frequencies, but for the half-duplex FDD, the UE cannot send and receive data at the same time; but this limitation does not exist with respect to the full-duplex FDD, i.e., there can be 10 downlink and 10 uplink subframes during every 10 ms interval.

Frame structure Type 2 is applicable to Time Division Duplex (TDD). A radio frame has a length of 10 ms, and is composed by two half-frames having a length of 5 ms. A half-frame is composed of 5 subframes having a length of 1 ms. The supported uplink and downlink configurations are as shown in table 1; and in the table "D" represents that this subframe is a downlink subframe, "U" represents that this subframe is an uplink subframe, and "S" represents that the subframe is a special subframe. The special subframe is composed of a downlink special subframe (DwPTS), a guard interval (GP) and an uplink special subframe (UpPTS), and has a total length of 1 ms. Each subframe i is composed of two time slots 2i and 2i + 1 with a length of 0.5 ms (15360 × Ts).

Table 1: Uplink and downlink configurations

| Uplink and downlink configuratio ns | Switching cycle from the down link to the up link | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

Frame structure Type 2 supports 5 ms and 10 ms, two kinds of downlink-uplink switching cycles. In a 5 ms uplink-downlink switching cycle, the two half-frames both have a special subframe. In a 10 ms uplink-downlink switching cycle, only the first half-frame has a special subframe. Subframes 0, 5 and the DwPTS are usually reserved as downlink transmission. The UpPTS and the next subframe near the special subframe are always reserved as uplink transmission. Therefore, for the 5 ms uplink-downlink switching cycle, the UpPTS, subframe 2 and subframe 7 are reserved as uplink transmission; and for the 10 ms uplink-downlink switching cycle, the UpPTS and subframe 2 are reserved as uplink transmission.

The following three kinds of physical downlink control channels are defined in LTE: Physical Control Format Indicator Channel (PCFICH), Physical Hybrid Automatic Retransmission Request Indicator Channel (PHICH) and Physical Downlink Control Channel (PDCCH).

Information born on the PCFICH is used for indicating the number of Orthogonal Frequency Division Multiplexing (OFDM) symbols transmitting PDCCH in a subframe, is sent on the first OFDM symbol in a subframe, and the frequency position where the information is located is determined by a system downlink bandwidth and cell Identify (ID for short).

The PHICH is used for bearing a positive acknowledgment/negative acknowledgment (ACK/NACK) feedback information of the uplink transmission data. The number of PHICHs, position in the time domain of the PHICH and position in the frequency domain of the PHICH can be determined by a system message and cell ID in a Physical Broadcast Channel (PBCH) of a downlink carrier where the PHICH is located.

The PDCCH is used for bearing Downlink Control Information (DCI) which comprises scheduler information about the Physical Uplink Shared Channel (PUSCH), scheduler information about the Physical Downlink Shared Channel (PDSCH) and uplink power control information.

For FDD, when the UE detects a PDCCH channel belonging to the UE and bearing scheduler information about the PUSCH on subframe n, or when the UE receives the PHICH belonging to the UE and corresponding to the PUSCH on the subframe n, the UE will send the PUSCH data on subframe n + 4 according to situations.

For TDD uplink-downlink configurations 1~6, when the UE detects in the subframe n a PDCCH channel belonging to the UE and bearing scheduler information about the PUSCH, or when the UE receives in the subframe n the PHICH belonging to the UE and corresponding to the PUSCH, the UE will send data of the PUSCH on subframe n+k according to situations. For TDD uplink-downlink configuration 0, when the UE detects in the subframe n a PDCCH channel belonging to the UE and bearing scheduler information about the PUSCH and the high-order bit of an uplink index (UL Index) signalling in the scheduler information is 1, or when the UE receives in the subframe 0 and subframe 5 the PHICH belonging to the UE and corresponding to the PUSCH and IPHICH = 0, the UE will send data of the PUSCH on subframe n + k according to situations. When the UE detects in the subframe n a PDCCH channel belonging to the UE and bearing scheduler information of the PUSCH and the low-order bit of an UL Index signalling in the scheduler information is 1, or when the UE receives in the subframe 0 and subframe 5 the PHICH belonging to the UE and corresponding to the PUSCH and IPHICH = 1, the UE will send data of the PUSCH on subframe n + 7 according to situations. The value of the above-mentioned k is as shown in table 2:

Table 2: Schematic table of the value of k corresponding to TDD configuration 0-6

| TDD uplink-downlink configuration | Downlink subframe number n | | | | | | | | | |
|---|---|---|---|---|---|---|---|---|---|---|
| | 0 | 1 | 2 | 3 | 4 | 5 | 6 | 7 | 8 | 9 |
| 0 | 4 | 6 | | | | 4 | 6 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

In Release8/9 of the LTE system, in order to measure the quality of the channel and to demodulate the received data symbol, a Common Reference Signal (CRS) is designed. User Equipment (UE) can measure the channel by the CRS, thus supporting the UE to reselect the cell and to switch to the target cell, and to measure the channel quality when the UE is in the connected state. When the interference level is high, the physical layer can disconnect by a high-layer relevant radio link connection failing signalling. In LTE R10, in order to further improve average frequency spectrum utilization ratio of the cell and edge frequency spectrum utilization ratio of the cell, and the throughput efficiency of each UE, two types of reference signals are respectively defined: channel state information reference signal (CSI-RS) and demodulation reference signal (DMRS), wherein the CSI-RS is used for channel measurement, and by measuring the CSI-RS, Precoding Matrix Indicator (PMI), Channel Quality Indicator (CQI) and Rank Indicator (RI) needing to be fed back to an eNodeB(eNB) by the UE can be calculated. The DMRS is used for the demodulation of the downlink shared channel, interference between different receiving sides and different cells can be reduced by means of wave beams using DMRS demodulation; and performance decrease resulted from codebook granularity can be reduced, and the cost of the downlink control signalling is reduced in an extent.

In LTE R8, R9 and R10, the PDCCH is mainly distributed on the first 1, 2 or 3 OFDM of a subframe, and the particular distribution should be configured according to different subframe types and the port number of the CRS, as shown in table 3.

Table 3: PDCCH distribution

| Subframe | the number of the OFDM symbols of the PDCCH) where $N_{\mathrm{RB}}^{\mathrm{DL}} > 10$ | the number of the OFDM symbols of the PDCCH where $N_{\mathrm{RB}}^{\mathrm{DL}} \leq 10$ |
|---|---|---|
| Subframe 1 and subframe 6 in subframe type 2 | 1, 2 | 2 |
| Multicast-Broadcast single frequency network (MBSFN) subframe on the carrier supporting PDSCH, with CRS configured as port 1 or port 2 | 1, 2 | 2 |
| MBSFN subframe on the carrier supporting PDSCH, with CRS configured as port 4 | 2 | 2 |
| Subframe on the transmission carrier not supporting PDSCH | 0 | 0 |
| Non-MBSFEN subframe configured as PRS (except subframe 6 of subframe structure type 2) | 1, 2, 3 | 2, 3 |
| All other situations | 1, 2, 3 | 2, 3, 4 |

During implementation, each receiving side should perform blind detection according to the received first three symbols, and the starting position of the blind detection and the number of the elements of the control channel is related with Radio Network Temporary Identification (RNTI) and different control information which are allocated to the receiving side. The control information can be generally classified as public control information and specific control information; the public control information is generally placed in a public search space of the PDCCH, and the specific control information can be placed in a public-owned space and a specific search space. The receiving side determines whether the current subframe carries a public system message, and downlink scheduler or uplink scheduler information after the blind detection. Since this type of downlink control information does not have a feedback of Hybrid Automatic Repeat reQuest (HARQ), the bit error rate of the detection should be ensured to be as low as possible.

In order to obtain larger working frequency spectrum and system bandwidth, a solution is to converge several continuous Component Carriers (frequency spectrums) distributed over different frequency bands using the Carrier Aggregation technique, forming a bandwidth that the LTE-Advanced can use, for example: 100 MHz. That is, with respect to the converged frequency spectrum, it is divided into n component carriers (frequency spectrums), and the frequency spectrum in each component carrier (frequency spectrum) is continuous. The frequency spectrum is classified as a primary component carrier (PCC) and a secondary component carrier (SCC), which are also called primary cell and secondary cell.

In the LTE R10 heterogeneous network, since strong interference exists among eNodeBs with different types, in consideration of the interference problem on a Pico eNodeB from the Macro eNodeB and the interference problem on the Macro eNodeB from the Home eNodeB, it is proposed to use the method of resource muting to solve the mutual interference problem among different types of eNodeBs; and the particular resource muting method can be a subframe-based Muting method, such as the method of Almost Blank Subframe (ABS), and can also be a method based on resource element, such as the CRS muting method.

However, the above-mentioned methods not only increase the resource waste, but also bring great limit to the scheduler, especially when taking the ABS configuration of the Macro eNodeB into consideration, if the distribution of the Pico is large, the amount ABSs configured by the Macro eNodeB is also large, great influence will be brought to the Macro eNodeB, and increases the scheduler time delay as well as the resource waste; and it is unable to solve the interference problem of the CRS resource and data resource, and unable to solve the interference between data resources for the method of muting CRS. In addition, the backward compatibility of the above-mentioned method is not good, more standardization effort may be demanded when adding to the access time delay.

In the LTE R11, it is considered to introduce more user to send data on the PDSCH area, the current configured capacity of at most 4 OFDM symbols may be not enough to satisfy the demand; in order to provide a control channel which is economic and of large capacity, an enhanced control channel area should be designed, or a new resource for transmitting the control information should be opened on the PDSCH resource. However, the method for transmitting the control information on the new resource is not determined yet, but the old version of method for transmitting the control information cannot ensure the accuracy of the transmission of the control information on the new resource.

With respect to the problem that the method for transmitting the control information on the new resource is not determined yet, but the old version method for transmitting the control information cannot ensure the accuracy of the transmission of the control information on the new resource, no effective solution is proposed yet.

**Summary**

The present invention provides a method and device for indicating a control channel, so as to at least solve the problem that the method for transmitting the control information on the new resource is not determined yet, but the old version of method for transmitting the control information cannot ensure the accuracy of the transmission of the control information on the new resource.

According to an aspect of the present invention, a method for indicating a control channel is provided. The method comprises: channelization processing is performed on the indication information indicating a control channel, wherein the control channel is a control channel on a newly added control channel area, or the control channel is on a resource which is newly carved out of resource reserved for the Physical Downlink Shared Channel (PDSCH) and is for transmitting control information; and the processed indication information is sent to user equipment (UE).

Preferably, after sending the processed indication information to the UE, the method further comprises: the UE receives the indication information and detects the control channel according to the indication information.

Preferably, the indication information comprises at least one of the following: the time domain position of the control channel area; the frequency domain position of the control channel area; the type of the method for indicating the control channel area; a mode for indicating the resource allocation of the control channel on the control channel area; and a time dependent mapping relationship between a control signalling born on the control channel and data scheduled by the control signalling.

Preferably, the channelization processing comprises the following channelization processes: encoding, modulation, layer mapping, antenna port mapping.

Preferably, the indication information is born on an specified physical or logical resource.

Preferably, the indication information being born on an assigned physical or logical resource comprises at least one of the following: the indication information being carried on the physical or logical resource alone; the indication information, attached with a Cyclic Redundancy Check (CRC), being carried on the physical or logical resource; the indication information and other control information, attached with the CRC, being born on the physical or logical resource.

Preferably, the physical or logical resource comprises: a logical resource CCE of a physical downlink control channel (PDCCH) transmitting the control information; or a resource on the PDSCH.

Preferably, the resource on the PDSCH comprises the other orthogonal frequency division multiplexing (OFDM) symbol resources except the OFDM symbols occupied by the PDCCH.

Preferably, when the indication information is born on the CCE, the indication information is born on continuous CCEs, wherein the starting position of the indication information is at least one of predefined one CCE number, and the predefined CCE numbers are integer times of the number of the CCE bearing the indication information.

Preferably, in the case of only one predetermined one CCE number, the starting position of the indication information is one of the following: at the beginning of the CCE numbers; at the end of the CCE numbers; and at an assigned position, wherein the assigned position is a position calculated according to a predetermined algorithm.

Preferably, that the UE receives the indication information comprises: when the indication information is born on the physical or logical resource alone, the UE acquires data on the CCE, and retrieves from an assigned position data of the indication information which has been performed the channelization processing, decodes it, then obtains the indication information; when the indication information, attached with the CRC, is born on the physical or logical resource, the UE acquires data on the CCE, and retrieves from the assigned position data of the indication information which has been performed the channelization processing, decodes the data retrieved, then determines the checked information as the indication information using the information obtained by the CRC check; and when the indication information and other control information, attached with the CRC, are born on the physical or logical resource, the UE acquires data on the CCE and retrieves from the assigned position data of the indication information and the other control information which has performed the channelization processing, decodes the data retrieved, according to information obtained by a CRC check determining information which passes the check as common information of the indication information and the control information, and then acquiring the indication information from the common information.

Preferably, when the indication information is born on the CCE, the indication information is born on continuous CCEs, wherein the CCE number at the starting position is integer times of the number of the CCEs bearing the indication information, and a position is selected in the at least one predefined possible position.

Preferably, the UE receiving the indication information comprises: when the indication information, attached with the cyclic check code CRC, is born on the physical or logical resource, the UE acquires data on the CCE, and tries to retrieve from at least one predefined position all possible data of the indication information which has been performed the channelization processing, decodes the retrieved data, and then information which passes the check is determined as the indication information according to information obtained by a CRC check; and when the indication information and other control information, attached with the CRC, are born on the physical or logical resource, the UE acquires data on the CCE and tries to retrieve, from at least one predefined possible position, all possible data of the indication information and the other control information which has been performed the channelization processing, decodes the data retrieved, according to information obtained by a CRC check information, which passes the check, is determined as common information of the indication information and the control information, and then the indication information is obtained from the common information..

Preferably, when the indication information is carried on the resource of the PDSCH, data of the indication information mapped to the antenna port is mapped to predetermined position in the PDSCH area, wherein the predetermined position is determined according to the bandwidth of the current system and the identity (ID) of the cell.

Preferably, the data of the indication information mapped to the antenna port being mapped to the predetermined positions in the PDSCH area comprises: grouping symbols to be mapped, with each group containing m3 symbols, and mapping according to that a group of symbols corresponds to a neighbor resource unit, wherein the m3 is a predefined number, an interval between the neighbor resource units mapping the symbols to be mapped is a predefined interval.

Preferably, the resource on the PDSCH comprises the other OFDM symbol resources except the OFDM symbols occupied by the PDCCH.

According to another aspect of the present invention, a device for indicating a control channel is provided, comprising: a processing module configured to perform channelization processing on the indication information indicating a control channel, wherein the control channel is a control channel on a newly added control channel area, or the control channel is on a resource which is newly carved out of resources reserved for the Physical Downlink Shared Channel (PDSCH) and is for transmitting control information.

Preferably, the processing module is further configured to bear the indication information on an assigned physical or logical resource.

Preferably, the processing module is further configured to bear the indication information on at least one of the following physical or logical resources: the indication information being carried on the physical or logical resource alone; the indication information, attached with the CRC, being carried on the physical or logical resource; the indication information and other control information, attached with the CRC, being carried on the physical or logical resource.

Preferably, the processing module is further configured to bear the indication information on continuous CCEs, when the indication information is born on the CCE, wherein the starting position of the indication information is at least one of predefined CCE numbers, and the predefined CCE number is integer times of the number of the CCEs bearing the indication information.

Preferably, the processing module is further configured to map data of the indication information mapped to the antenna port to predetermined positions in the PDSCH area, when the indication information is born on the resource of the PDSCH, wherein the predetermined positions are determined according to the bandwidth of the current system and the ID of the cell.

Preferably, the processing module is further configured to group symbols to be mapped, with each group containing m3 symbols, and to map according to that a group of symbols corresponds to a neighbor resource unit, wherein the m3 is a predefined number, and an interval between the neighbor resource units mapping the symbols to be mapped is a predefined interval.

In the embodiments of the present invention, in order to ensure correct and convenient receiving of information on the new control resource by the UE, new indication information is set, and the new indication information is used to indicate the control information; then the UE can detect the control information according to the indication information to realize correct and convenient receiving of the information on the new resource.

**Brief Description of the Drawings**

Drawings, provided for further understanding of the present invention and forming a part of the application, are used to explain the present invention together with embodiments of the present invention rather than to limit the present invention. Wherein:

Fig. 1 is a flowchart of the processing of a method for indicating a control channel according to the embodiment of the present invention;
Fig. 2 is a schematic diagram of the position and size of frequency domain position information according to embodiment 2 of the embodiments of the present invention;
Fig. 3 is a schematic diagram of information bits being not enough for the fixed size and the rest positions being filled with 0 according to the embodiment of the present invention;
Fig. 4A is the first flowchart of the indication information passing through digitalization processing according to the embodiment of the present invention;
Fig. 4B is the second flowchart of the indication information passing through digitalization processing according to the embodiment of the present invention;

Fig. 5 is a flowchart of processing of the indication information without being attached with CRC according to embodiment 10 of the embodiment of the present invention;

Fig. 6 is a schematic diagram of the position of the indication information on the CCE according to embodiment 10 of the embodiments of the present invention;

Fig. 7 is a flowchart of processing of the indication information attached with a CRC according to embodiment 11 of the embodiments of the present invention;

Fig. 8 is a schematic diagram of the position of the indication information on the CCE according to embodiment 11 of the embodiments of the present invention;

Fig. 9 is a flowchart of the processing of the indication information and other control information both attached with the CRC according to embodiment 12 of the embodiments of the present invention;

Fig. 10 is a schematic diagram of the position of the indication information on the CCE according to embodiment 12 of the embodiments of the present invention;

Fig. 11 is a schematic diagram of the predetermined position of the data mapped to an antenna port being mapped to the PDSCH area according to embodiment 13 of the embodiments of the present invention;

Fig. 12 is a structural schematic diagram of a device for indicating a control channel according the embodiments of the present invention.


**Detailed Description of the Embodiments**

The present invention will be described in detail below with reference to the accompanying drawings and embodiments. Note that, the embodiments of the present invention and the features of the embodiments can be combined with each other if there is no conflict.

As mentioned in the relevant art, in the LTE R11 stage, it is considered to introduce much users to emit data on the PDSCH area, the current configured capacity of at most 4 OFDM symbols may be not enough to satisfy the requirement; in order to provide a channel which is economic and of large capacity, an enhanced control channel area should be designed, or a new resource for transmitting the control information should be curved out of the PDSCH resource. However, the method for transmitting the control information on the new resource is not determined yet, but the old version of method for transmitting the control information cannot ensure the accuracy of the transmission of the control information on the new resource.

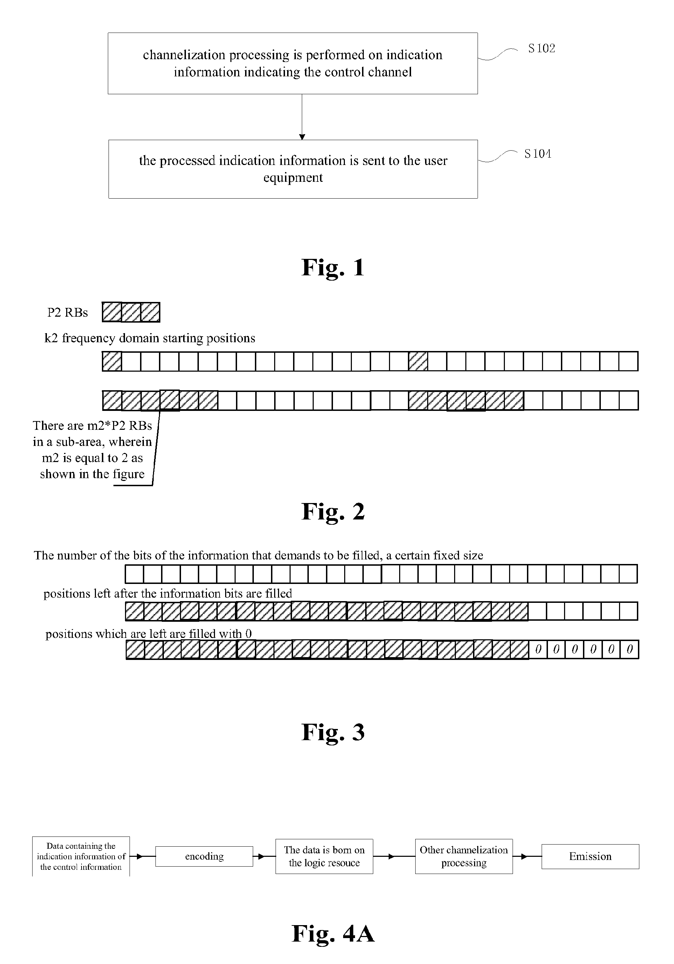

In order to ensure the correct and convenient receiving of information on the new control resource by the UE, necessary indications should be given to transmit the control information on the new resource. In order to solve the above-mentioned technique problem, a method for indicating a control channel is provided in an embodiment of the present invention, and the processing flow is as shown in Fig. 1, comprising step S102 to step S104.

Step S102, channelization processing is performed on indication information indicating the control channel.

The control channel involved in the step S102 is a control channel on a newly added control channel area, or is on a resource which is newly carved out of resources reserved for PDSCH and is for transmitting control information; and step S104, the processed indication information is sent to the user equipment (UE).

In the embodiment of the present invention, in order to ensure correct and convenient receiving of information on the new control resource by the UE, new indication information is set, and the new indication information is used to indicate the control information; then the UE can detect the control information according to the indication information to realize correct and convenient receiving of the information on the new resource.

During implementation, the processed indication information is sent to the UE, and then the UE receives the indication information, thus being able to detect the control channel according to the indication information. If the indication information indicates that there is no control channel, the UE does not need to detect the UE, thus saving resource; and if the indication information indicates that there is a control channel, the UE will search and detect the position of the control channel according to the indication information, so that the pertinence is strong; without the need to use polling or other methods to search all the resources, the purpose of saving resources can be reached as well, and the capacity for scheduling the UE can also be increased.

The purpose of the indication information is for indicating the control channel; therefore, the indication information comprises various information which is able to indicate control information, for example, the time domain position of the control channel area, and another example, the frequency domain position of the control channel area, the type of the method for indicating the control channel area (explaining using which method to indicate the control channel area), a mode for indicating the resource allocation of the control channel on the control channel area, and indicating a time dependent mapping relationship between a control signalling born on the control channel and data scheduled by the control signalling, etc.. During particular implementation, any one of the above-mentioned various kinds of information can be used as the indication information, and a combination of any several thereof can be used as the indication information, as long as the individual information or combined information thereof can reach the purpose of indicating the control channel.

Detail description will be made to the type of the indication information and corresponding settings with some particular embodiments.

Embodiment 1: in this embodiment, the indication information comprises only information of the time domain position of the control channel area.

Example 1, the control channel area is on the first time slot:

method 1,
the control channel area is K successive OFDM symbols starting from the Sth OFDM symbol in the first time slot;

application 1: S and K are given out by the indication information;

application 2: S is predefined, and K is given out by the indication information;

application 3: S is given out by the indication information, and K is predefined.

method 2

The control channel area is K successive OFDM symbols starting from the first OFDM symbol in the first time slot; and K is given out by the indication information.

Example 2, the control channel area is on the second time slot:

method 1
The control channel area is K successive OFDM symbols starting from the Sth OFDM symbol in the second time slot;

application 1: S and K are given out by the indication information;

application 2: S is predefined, and K is given out by the indication information; and

application 3: S is given out by the indication information, and K is predefined.

method 2

The control channel area is K successive OFDM symbols starting from the first OFDM symbol in the second time slot, wherein K is given out by the indication information.

Example 3, the control channel area is on the first or second time slot:

the time slot where the control channel area is located is given out by the indication information.

Embodiment 2: in this embodiment, the indication information comprises only information of the frequency domain position of the control channel area.

Example 1, the frequency domain area is the sum (combination) of k2 such sub-areas, any one sub-area herein is: m2 * P2 resource blocks (RBs) continuous in an adding order starting from a predetermined starting position; wherein P2 is predetermined, k2 starting positions are predefined, and m2 is given out by the indication information. The schematic diagram thereof is as shown in Fig. 2.

Example 2, the method mentioned in type 0/1/2 used in resource allocation in document 3GPP TS 36.213 is adopted.

Embodiment 3: in this embodiment, the indication information comprises: information of frequency domain position of the control channel area + method for indicating the control channel area

The indication information gives out indication for the frequency domain position and give out the method for indicating the frequency domain position at the same time.

In particular application, the eNodeB configures multiple methods for indicating the frequency domain position, the UE should uses a correct method to understand the indication of the frequency domain position given out by the eNodeB, so that information about the frequency domain position can only be obtained in this way.

More Further, the method for indicating the control channel area informs the UE of the currently used method for indicating the control channel area clearly using 0, 1 combination of bits, and table 4 is taken as an example:

Table 4

| 00 | Type 0 mentioned in 3GPP TS 36.2.2 |
|----|------------------------------------|
| 01 | Type 1 mentioned in 3GPP TS 36.2.2 |
| 10 | Type 2 mentioned in 3GPP TS 36.2.2 |
| 11 | Method mentioned in 3GPP TS 36.2.1 |

Embodiment 4: in this embodiment, the indication information comprises: information of frequency domain position of the control channel area + a mode for indicating the resource allocation of the control channel on the control channel area.

In particular application, frequency domain resources allocated to a control channel on a control channel area can be continuous, can also be separated, can also be in virtual distribution, and can also be interlaced with other control channel resources; so in the case where a variety of configurations exist and are not predetermined, a mode for indicating the resource allocation of the control channel on the control channel area should be indicated.

Embodiment 5: in this embodiment, the indication information comprises: information of frequency domain position of the control channel area + a mode for indicating the resource allocation of the control channel on the control channel area.

Embodiment 6: in this embodiment, the indication information comprises: information of frequency domain position of the control channel area + a method for indicating the control channel area + a mode for indicating the resource allocation of the control channel on the control channel area.

Embodiment 7: in this embodiment, the indication information comprises: information of time domain position of the control channel area + a method for indicating the control channel area + a mode for indicating the resource allocation of the control channel on the control channel area.

Embodiment 8: in this embodiment, the indication information comprises: information of time domain position of the control channel area + a time dependent mapping relationship between a control signalling born on the control channel and data scheduled by the control signalling.

Embodiment 9: in this embodiment, the indication information comprises: information of frequency domain position of the control channel area + a time dependent relationship between a control signalling born on the control channel and data scheduled the control signalling.

The control channel is sent out on the nth subframe, and the data which is emitted according to the control channel is sent out on the (n + k)th subframe, wherein k is given out by the indication information.

Furtherly, in order to obtain a predetermined bit amount, an occupation bit may be added the indication information during the process of forming 0, 1 bit information string. The occupation bit is applied to the tail of the information string, and appears in the form of 0. For the schematic diagram thereof, please see Fig. 3.

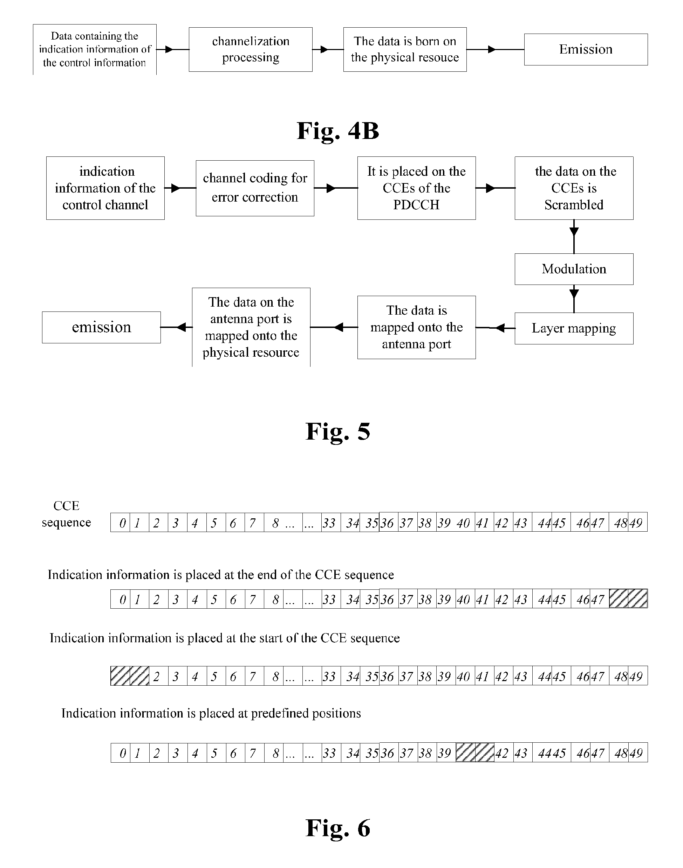

Performing channelization processing on the indication channel is mentioned in the flow shown in Fig. 1, wherein the involved channelization processing can comprise the following channelization processes: encoding, modulation, layer mapping, and antenna port mapping. Since the indication information cannot exist alone, the indication information should be born on an assigned physical or logical resource. The resources bearing the indication information are different, and the corresponding processing flows are also different. For example, the flow of the indication information passing through digitalization processing is as shown in Fig. 4A, and the flow comprises: data containing the indication information of the control channel is emitted after being encoded, born on the logic resource, and performed other channelization processing; or as shown in Fig. 4B, the data containing the indication information of the control channel is emitted after being performed channelization processing, born on the physical resource, and performed the processing.

During implementation, there are a variety of bearing forms for the indication information being born on an assigned physical or logical resource, for example, the indication information can be born on the physical or logical resource alone; in order to ensure the accuracy of the indication information, the indication information attached with a CRC can be born on the physical or logical resource,; and in order to use the resources sufficiently and to avoid the waste of the resources, the indication information and other control information, which are attached with the CRC, can also be born on the physical or logical resource.

In a preferred embodiment, the physical or logical resource can choose a logical resource CCE of a physical downlink control channel (PDCCH) transmitting the control information, or a resource on the physical downlink shared channel (PDSCH). During implementation, other resources can be used, as long as it can bear the indication information and sends it to the UE.

The above-mentioned resources on the PDSCH preferably use OFDM symbol resources, particularly the other OFDM symbol resources except the OFDM symbols occupied by the PDCCH. During particular application, the indication information can be born on any OFDM symbol which can be used, and can also occupy more than one OFDM symbols, for example, 2 OFDM symbols, 30FDM symbols, etc, as long as not exceeding the number of the OFDM symbols which can be used.

When the indication information is born on the CCE, the indication information is born on continuous CCEs, wherein the starting position of the indication information is at least one of the predefined CCE numbers, and the predefined CCE number is integer times of the number of the CCEs bearing the indication information. When there is only one predefined starting position, preferably, the starting position of the indication information can be any one of the following: at the start of the CCE numbers; and at the end of the CCE numbers; or at an assigned position, with the assigned position being a position calculated according to a preset algorithm. The preset algorithm can preferably choose the public search space position algorithm of the PDCCH in 3GPP TS 36.213, or other position algorithm, which is determined according to particular situations. In addition, when the indication information predefines that there are more than one starting positions, preferably, the predefined limited number of possible CCE numbers can be calculated according to the predefined algorithm, and the preset algorithm can preferably choose the public search space position algorithm of the PDCCH in 3GPP TS 36.213, or other position algorithm, which is determined according to particular situations.

According to different methods of the indication information born on the physical or logical resource, the subsequent processing methods after the UE receives the indication information are also different, particularly comprising the following situations:

situation A, when the indication information is born on the physical or logical resource alone, the UE acquires data on the CCEs, and retrieves from an assigned position the data of the indication information which has passed through the channelization processing, decodes the data of the indication information, and then obtains the indication information;

situation B, when the indication information, attached with CRC, is born on the physical or logical resource, the UE acquires data on the CCEs, and retrieves from an assigned position the data of the indication information which has passed through the channelization processing, decodes the data of the indication information, and then determines the checked information as the indication information using the information obtained by the CRC check;

situation C, when the indication information and other control information, attached with the CRC, are born on the physical or logical resource, the UE acquires data on the CCE and retrieves from the assigned position data of the indication information and other control information which has passed through the channelization processing, decodes the data of the indication information and other control information, and then determines the checked information as common information of the indication information and the control information using the information obtained by the CRC check, and obtains the indication information from the common information.

The above-mentioned situations A-C are described with respect to the case where the predefined starting position of the indication information is only a CCE number; and in particular application, the predefined starting positions of the indication information might be more than one CCE number, here authentication must be performed on the information using the CRC to ensure the accuracy of the information, particularly comprising the following situations:

situation D, when the indication information, attached with the CRC, is born on the physical or logical resource, the UE acquires data on the CCE, and tries to retrieve from the predefined at least one possible position all possible data of the indication information which has been performed the channelization processing, decodes the retrieved data, and then determines the checked information as the indication information using the information obtained by the CRC check;

situation E, when the indication information and other control information, which are attached with the CRC, are born on the physical or logical resource, the UE acquires data on the CCE and tries to retrieve from the predefined at least one possible positions all possible data of the indication information and data of other control information which has passed through the channelization processing, decodes same, and then determines the checked information as common information of the indication information and the control information using the information obtained by the CRC check, and obtains the indication information from the common information.

During implementation, when the indication information is born on the resource of the PDSCH, data of the indication information mapped to the antenna port is mapped to a predetermined position in the PDSCH area, wherein the predetermined position is determined according to the bandwidth of the current system and the identity (ID) of the cell. Symbols to be mapped are grouped, with each group containing m3 symbols; and mapping is performed according to that a group of symbols correspond to a neighbor resource unit, wherein the m3 is a predefined number, an interval between the neighbor resource units mapped the symbols is a predefined interval. Predefined rules are observed in subsequent processing.

Particular embodiment explanation will be made below in combination with different scenarios.

Scenario 1: Indication information for the UE to detect the control channel is born on the logical resource CCEs used by the PDCCH, and is sent out after being performed channelization processing.

Embodiment 10: in this embodiment the indication information is not attached with the CRC

Indication information for the UE to detect the control channel is not attached with the CRC, and is emitted after being encoded, born on the logical resource CCEs used by the PDCCH and performed channelization processing. The particular processing process is as shown in Fig. 5, which comprises: the indication information of the control channel is emitted to the UE after being performed the following, channel coding for error correction, placing on the logical resource CCE of the PDCCH, scrambling the data on the CCEs, modulation, layer mapping, mapping of data onto the antenna port and mapping of the data on the antenna port onto the physical resource.

The starting position of the indication information is a predefined CCE number, and the indication information is placed on continuous CCEs; and the CCE number of the starting position of the indication information is integer times of the number of the used CCEs. For the schematic diagram thereof, please see Fig. 6. In this embodiment, the starting position of the indication information can have the following setting methods:

Method 1, the starting position of the indication information is at the start of the CCE number.

Method 2, the starting position of the indication information is at the end of the CCE number.

Method 3, the starting position of the indication information is calculated according to the public search space position algorithm of the PDCCH in 3GPP TS 36.213, and is one of the calculated positions which are predefined.

In particular application, the UE acquires data on the CCEs, retrieves data of the indication information, which is performed the coding, from the predefined position, decodes the data of the indication information to obtain the indication information.

Embodiment 11: in this embodiment the indication information is attached with the CRC

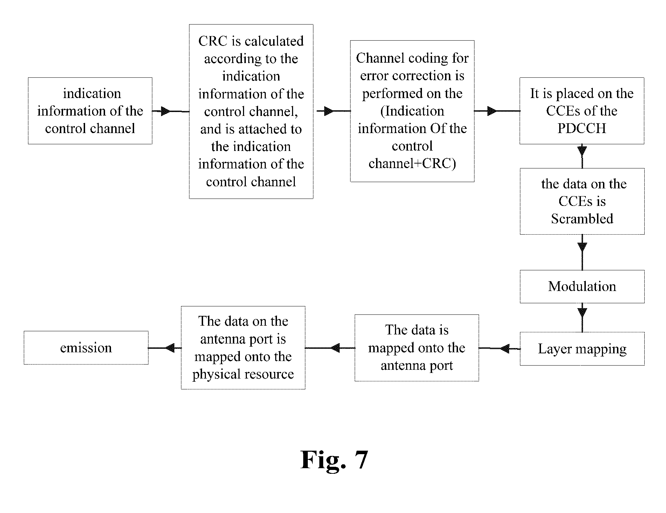

Indication information for the UE to detect the control channel is attached with the CRC, and is emitted after being encoded, born on the logical resource (CCE) used by the PDCCH and performed channelization processing. The particular processing process is as shown in Fig. 7, which comprises:

the CRC is calculated according to the indication information of the control channel, and the CRC is attached to the end of the indication information of the control channel;

channel coding for error correction is performed on the indication information of the control channel attached with the CRC;

the data is placed on the logical resource (CCE) of the PDCCH;

the data on the CCEs is scrambled;

then the data is sent to the UE after performing the following on: modulation, layer mapping, mapping of data onto the antenna port, and mapping of the data on the antenna port onto the physical resource.

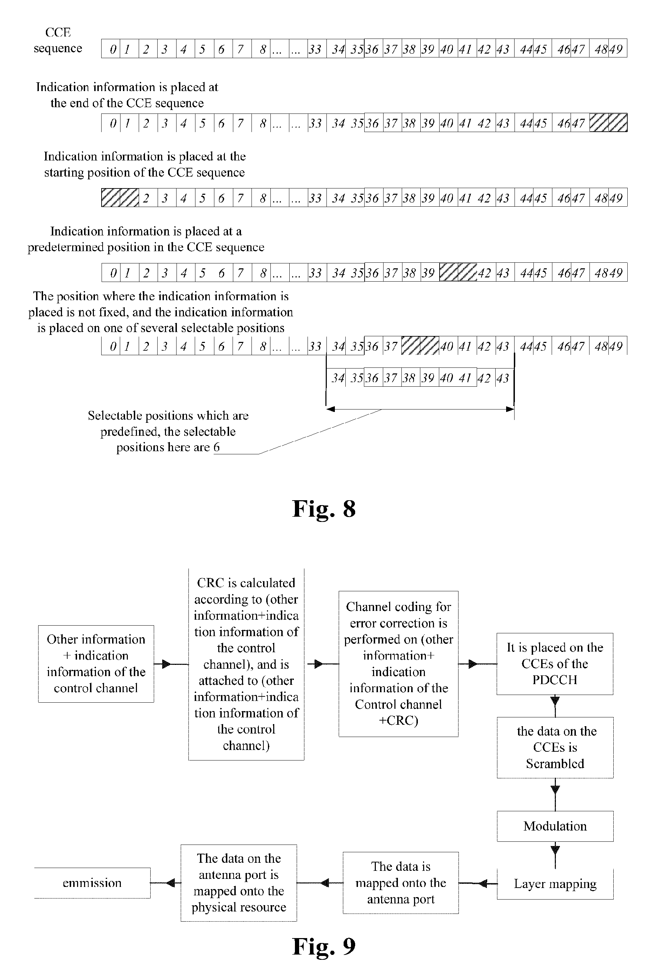

In this embodiment, the indication information is placed on continuous CCEs; and the CCE number of the starting position of the indication information is integer times of the number of the used CCEs. The starting position of the indication information is at least one of the predefined CCE numbers. The schematic diagram thereof is as shown in Fig. 8.

In this embodiment, the following two different processing methods are used to determine the position of the indication information:

method 1: the CRC is obtained by calculating according to the indication information which is for the UE to detect the control channel, and the indication information for the UE to detect the control channel is attached with the CRC; the indication information attached with the CRC is encoded and then born on the logical resource (CCE) used by the PDCCH, and is sent out after being performed channelization processing. The indication information is placed on continuous CCEs; and the CCE number at the starting position of the indication information is integer times of the number of the used CCEs. The starting position of the indication information being a predefined CCE number, and the predefined starting position of the indication information being only a CCE number comprises: the starting position of the indication information is at the start of the CCE number; or the starting position of the indication information is at the end of the CCE number; or the starting position of the indication information is calculated according to the public search space position algorithm of the PDCCH in 3GPP TS 36.213, and is one of the calculated positions which are predefined.

Method 2: the CRC is obtained by calculating according to the indication information for the UE to detect the control channel, and the indication information for the UE to detect the control channel is attached with the CRC; the indication information is encoded and then born on the logical resource (CCE) used by the PDCCH, and is sent out after being performed channelization processing. The indication information is placed on continuous CCEs; and the CCE number at the starting positions of the indication information is integer times of the number of the used CCEs. The starting position of the indication information is at least one of the predefined CCE positions, and the predefined starting position of the indication information is more than one CCE number; the UE does not predetermine which particular position the eNodeB will use, and the predefined starting position of the indication information is calculated according to the public search space position algorithm of the PDCCH in 3GPP TS 36.213.

In particular application, the UE acquires data on the CCEs, retrieves data about the encoded indication information successively from several possible positions, decodes same and then checks the indication information data using CRC; and the checked indication information data is the target indication information data.

Embodiment 12: in this embodiment, the indication information and other control information are attached with the CRC

Indication information for the UE to detect the control channel and other control information are attached with the CRC, it is encoded and then born on the logical resource (CCE) used by the PDCCH, and is sent out after being performed channelization processing. The particular processing process is as shown in Fig. 9, which comprises:

the CRC is calculated according to other information and the indication information of the control channel, and the CRC is attached to the end of the other information + indication information of the control channel;

channel coding for error correction is performed on the information which is composed by other information, the indication information of the control channel and the CRC;

it is placd on the logical unit (CCE) of the PDCCH;

the data on the CCE is scrambled;

the data is emitted after performing the following on it: modulation, layer mapping, mapping of data onto the antenna port, and mapping of the data on the antenna port onto the physical resource.

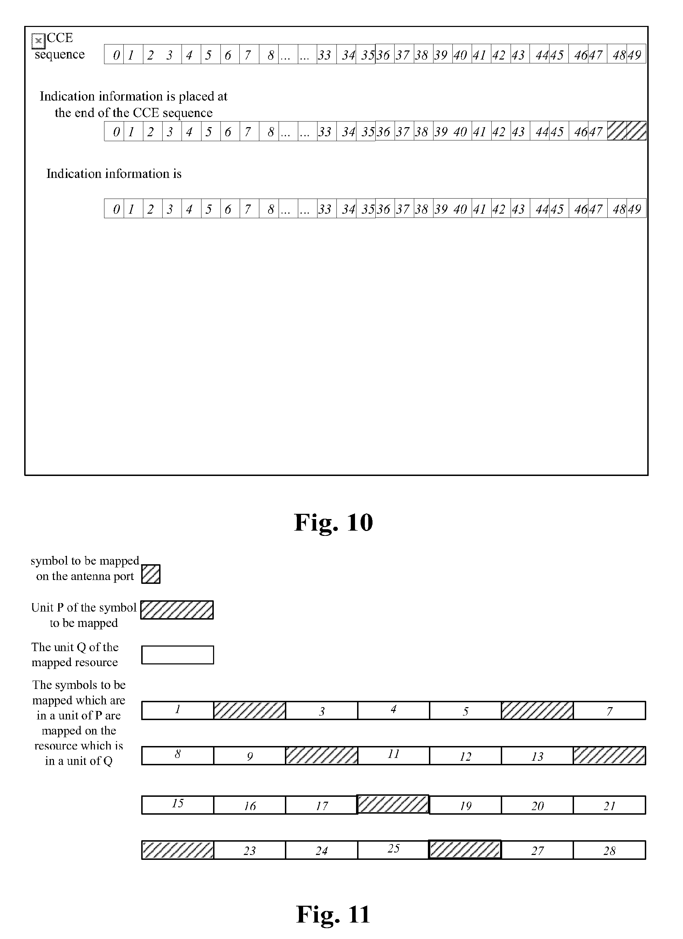

The indication information is placed on continuous CCEs; and the CCE number at the starting position of the indication information is integer times of the number of the used CCEs. The starting position of the indication information is at least one of the predefined CCE numbers. The schematic diagram thereof is as shown in Fig. 10.

In this embodiment, the following two different processing methods are used to determine the position of the indication information:

method 1: the CRC is obtained by calculating according to the indication information for the UE to detect the control channel and other control information, and the indication information for the UE to detect the control channel and other control information are attached with the CRC; the indication information and other control information, which is attached with CRC, is encoded and then born on the logical resource (CCE) used by the PDCCH, and are performed channelization processing and then sent out. The indication information is placed on continuous CCEs; and the CCE number of the starting position of the indication information is integer times of the number of the used CCEs. The starting position of the indication information is a predefined CCE number, and the predefined starting position of the indication information is only a CCE number, wherein the starting position of the indication information is at the start of the CCE number; or the starting position of the indication information is at the end of the CCE number; or the starting position of the indication information is calculated according to the public search space position algorithm of the PDCCH in 3GPP TS 36.213, and is one of the calculated positions which are predefined.

Method 2: the CRC is obtained by calculating according to the indication information for the UE to detect the control channel and other control information together, and the indication information for the UE to detect control channel and other control information are attached with the CRC; the indication information and other control information which is attached with CRC is encoded and then born on the logical resource (CCE) used by the PDCCH, and are sent out after being performed channelization processing. The indication information is placed on continuous CCEs; and the CCE number of the starting position of the indication information is integer times of the number of the used CCE. The starting position of the indication information is at least one of the predefined CCE positions, and the predefined starting positions of the indication information are more than one CCE number; the UE does not predetermine which particular position the eNodeB will use, and the predefined starting position is calculated according to the public search space position algorithm of the PDCCH in 3GPP TS 36.213.

In particular application, the UE acquires the data on the CCEs, retrieves common data about the encoded indication information and other control information from several possible positions, decodes same and then checks the common data about the indication information and other control information using CRC; and the checked data is the common data of the target indication information and other control information, and the indication information of the control channel is obtained from the common data.

Scenario 2: the indication information for the UE to detect the control channel is born on the resource of the PDSCH (the other rest OFDM symbol resource except the OFDM symbols occupied by the PDCCH), the indication information is sent out after being performed channelization processing on.

Embodiment 13: in this embodiment, the indication information is born on the resource of the PDSCH.

The indication information for the UE to detect the control channel is born on the resource of the PDSCH, and is sent out after the channelization processing. The data mapped to the antenna port is mapped to the predetermined position in the PDSCH area. This predefined position should be related with the bandwidth of the system and the ID of the cell.

The particular mapping method for mapping data mapped to the antenna port to the predetermined position in the PDSCH area is as follows:

The indication information for the UE to detect the control channel is born on the resource of the PDSCH, and is sent out after the Channelization processing. The data mapped to the antenna port is mapped to the predetermined position in the PDSCH area. This predefined position should be related with the bandwidth of the system and the ID of the cell. Given the neighbor resource allocation unit has m3 symbols (meaning that the m3 symbols should be placed on neighbor resources, cannot be divided or divided too far away, i.e., predefined interval), recorded as P (the unit of the symbol to be mapped); and the neighbor resource unit (resource unit, the resources that can be mapped provided in a unit are neighbor,), recorded as Q, can provide mapping for m3 symbols. The symbols on the antenna port to be mapped are n3 Ps, the resources limited on the PDSCH which can provide mapping are n4 Qs, wherein $n4 \geq n3$, and the n3 Ps should be mapped on n4 Qs by equal intervals as much as possible, wherein m3 is predefined. The schematic diagram of the mapped resource is as shown in Fig. 11.

Embodiment 14

The indication information for the UE to detect the control channel is born on the resource of the PDSCH, and is sent out after the channelization processing. The indication information of the control channel is 2 bit; and channel coding is performed thereon by using (3, 2) block code, and this is repeated for k times to obtain encoded indication information data. The value of k is determined by the related relevant protocol and other conditions, and preferably the value range of k is set to be integers in the range of 10-20; and if the protocols are different or the resources are different, the upper limit of value of k can be 30, 40, 50, 60 or even more, and then lower limit can also be an integer smaller than 10, such as any number value in the range of 0-9.

Embodiment 15

The indication information for the UE to detect the control channel is born on the resource of the PDSCH, and is sent out after the Channelization processing. The indication information of the control channel is 3 bit; and channel coding is performed thereon by using (4, 3) block code, and this is repeated for k times to obtain encoded indication information data. The value of k is an integer in the range of 10-20.

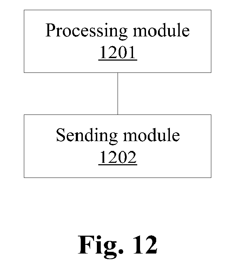

Based on the inventive concept, the embodiments of the present invention also provides a device for indicating a control channel, the structural schematic is as shown in Fig. 12, comprising:

a processing module 1201 configured to perform channelization processing on indication information indicating the control channel, wherein the control channel is a control channel on a newly added control channel area or the control channel is on a resource which is newly carved out of a Physical Downlink Shared Channel (PDSCH) resource and is for transmitting control information; and

a sending module 1202, connected to the processing module 1201, configured to send to a user equipment (UE) the indication information processed.

In an embodiment, preferably, the processing module 1201 can also be configured to bear the indication information on an assigned physical or logical resource.

In an embodiment, preferably, the processing module 1201 can also be configured to bear the indication information on at least one of the following physical or logical resource:

the indication information being born on the physical or logical resource alone;
the indication information attached with a Cyclic Redundancy Check (CRC), being born on the physical or logical resource;
the indication information and other control information, attached with the CRC, being born on the physical or logical resource.

In an embodiment, preferably the processing module 1201 can also be configured to bear the indication information on continuous CCEs when the indication information is born on the CCE, wherein the starting position of the indication information is at least one of predefined CCE numbers, and the predefined CCE number is integer times of the number of the CCE bearing the indication information.

In an embodiment, preferably, the processing module 1201 can further be configured to map data of the indication information mapped to the antenna port to predetermined positions in the PDSCH area, when the indication information is born on the resource of the PDSCH, wherein the predetermined position is determined according to the bandwidth of the current system and the ID of the cell.

In an embodiment, preferably, the processing module 1201 can further be configured to group symbols to be mapped, with each group containing m3 symbols, and to map according to that a group of symbols corresponds to a neighbor resource unit, wherein the m3 is a predefined number, an interval between the neighbor resource units mapping the symbols to be mapped is a predefined interval.

From the description above, it can be seen that the present invention achieves the following technique effects:

In the embodiments of the present invention, in order to ensure correct and convenient receiving of information on the new control resource by the UE, new indication information is set, and the new indication information is used to indicate the control information; then the UE can detect the control information according to the indication information to realize correct and convenient receiving of the information on the new resource.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within of the present invention are all included in the scope of the protection of the present invention.

**Claims**

1. A method for indicating a control channel, **characterized by** comprising:

performing channelization processing on indication information indicating the control channel, wherein the control channel is a control channel on a newly added control channel area or the control channel is on a resource, which is newly carved out of a Physical Downlink Shared Channel (PDSCH) resource and is for transmitting control information; and
sending to an user equipment (UE) the indication information processed.

**2.** The method according to claim 1, **characterized in that** after sending to the UE the indication information processed, the method further comprises: the UE receiving the indication information and detecting the control channel according to the indication information.

**3.** The method according to claim 1, **characterized in that** the indication information comprises at least one of the following:

a time domain position of the control channel area;
a frequency domain position of the control channel area;
a method type for indicating the control channel area;
a mode for indicating the resource allocation of the control channel on the control channel area; and
a time dependent mapping relationship between a control signalling born on the control channel and data scheduled by the control signalling.

**4.** The method according to claim 1, **characterized in that** the channelization processing comprises the following channelization processes: encoding, modulation, layer mapping and antenna port mapping.

**5.** The method according to claim 1 or 2, **characterized in that** the indication information is born on an assigned physical or logical resource.

**6.** The method according to claim 5, **characterized in that** the indication information being born on the assigned physical or logical resource comprises at least one of the following:

the indication information being born on the physical or logical resource alone;
the indication information, attached with a Cyclic Redundancy Check (CRC), being born on the physical or logical resource; and
the indication information and other control information, attached with the CRC, being born on the physical or logical resource.

**7.** The method according to claim 6, **characterized in that** the physical or logical resource comprises: a logical resource CCE of a Physical Downlink Control Channel (PDCCH) transmitting the control information; or a resource on the PDSCH.

**8.** The method according to claim 6, **characterized in that** the resource on the PDSCH comprises other Orthogonal Frequency Division Multiplexing (OFDM) symbol resource except the OFDM symbols occupied by the PDCCH.

**9.** The method according to claim 6, **characterized in that** when the indication information is born on the CCE, the indication information is born on continuous CCEs, with a starting position of the indication information being at least one of predefined CCE numbers, and the predefined CCE numbers being integer times of the number of the CCEs bearing the indication information.

**10.** The method according to claim 9, **characterized in that** the starting position of the indication information is embodied as any one of the following:

a position at the start of the CCE numbers;
a position at the end of the CCE numbers; and
an assigned position, wherein the assigned position is a position calculated according to a predetermined algorithm.

**11.** The method according to claim 10, **characterized in that** the UE receiving the indication information comprises:

when the indication information is born on the physical or logical resource alone, the UE acquiring data on the CCE, and retrieving from the assigned position data of the indication information which has been performed the channelization processing, decoding the data, and then obtaining the indication information;
when the indication information, attached with the Cyclic Redundancy Check (CRC), is born on the physical or logical resource, the UE acquiring data on the CCE, and retrieving from the assigned position data of the indication information which has been performed the channelization processing, decoding the data retrieved, and then according to information obtained by a CRC check determining information which passes the check as the indication information; and

when the indication information and other control information, attached with the CRC, are born on the physical or logical resource, the UE acquiring data on the CCE and retrieving from the assigned position data of the indication information and the other control information which has been performed the channelization processing, decoding the data retrieved, according to information obtained by a CRC check determining information which passes the check as common information of the indication information and the control information, and then acquiring the indication information from the common information.

12. The method according to claim 6, **characterized in that** when the indication information is born on the CCE, the indication information is born on continuous CCEs, with a CCE number at the starting position being integer times of the number of the CCEs bearing the indication information, and selecting a position in the predefined at least one possible position.

13. The method according to claim 12, **characterized in that** the UE receiving the indication information comprises:

when the indication information, attached with the Cyclic Redundancy Check (CRC), is born on the physical or logical resource, the UE acquiring data on the CCE, and trying to retrieve from the predefined at least one possible position all possible data of the indication information which has been performed the channelization processing, decoding the retrieved data, and then according to information obtained by a CRC check determining information which passes the check as the indication information; and

when the indication information and other control information, attached with the CRC, are born on the physical or logical resource, the UE acquiring data on the CCE and trying to retrieve from the predefined at least one possible position all possible data of the indication information and the other control information which has been performed the channelization processing, decoding the data retrieved, according to information obtained by a CRC check determining information which passes the check as common information of the indication information and the control information, and then acquiring the indication information from the common information.

14. The method according to claim 6, **characterized in that** when the indication information is born on the PDSCH resource, data of the indication information mapped to the antenna port is mapped to predetermined positions in the PDSCH area, with the predetermined positions being determined according to the bandwidth of the current system and the identity (ID) of a cell.

15. The method according to claim 14, **characterized in that** the data of the indication information mapped to the antenna port being mapped to the predetermined positions in the PDSCH area comprises: grouping symbols to be mapped, each group containing m3 symbols, and mapping according to that a group of symbols corresponds to a neighbor resource unit, with the m3 being a predetermined number, an interval between the neighbor resource units mapping the symbols to be mapped is a predefined interval.

16. The method according to claim 1, **characterized in that** the resource on the PDSCH comprises the other Orthogonal Frequency Division Multiplexing (OFDM) symbol resource except the OFDM symbols occupied by the PDCCH.

17. A device for indicating a control channel, **characterized by** comprising:

a processing module configured to perform channelization processing on indication information indicating the control channel, wherein the control channel is a control channel on a newly added control channel area or the control channel is on a resource, which is newly carved out of a physical downlink shared channel (PDSCH) resource and is for transmitting control information; and

a sending module configured to send to a user equipment (UE) the indication information processed.

18. The device according to claim 17, **characterized in that** the processing module is further configured to bear the indication information on an assigned physical or logical resource.

19. The device according to claim 18, **characterized in that** the processing module is further configured to bear the indication information on at least one of the following physical or logical resources:

the indication information being born on the physical or logical resource alone;
the indication information, attached with Cyclic Redundancy Check (CRC), being born on the physical or logical resource; and

the indication information and other control information, attached with the CRC, being born on the physical or logical resource.

20. The device according to claim 19, **characterized in that** the processing module is further configured to bear the indication information on continuous CCEs when the indication information is born on the CCE, with a starting position of the indication information being at least one of predefined CCE numbers, and the predefined CCE numbers being integer times of the number of the CCE bearing the indication information.

21. The device according to claim 19, **characterized in that** when the processing module is further configured to bear the indication information on the PDSCH resource, and to map data of the indication information mapped to the antenna port to predetermined positions in the PDSCH area, with the predetermined positions being determined according to the bandwidth of the current system and the identity (ID) of a cell.

22. The device according to claim 21, **characterized in that** the processing module is further configured to group symbols to be mapped, with each group containing m3 symbols, and to map according to that a group of symbols corresponds to a neighbor resource unit, wherein the m3 is a predefined number, an interval between the neighbor resource units mapping the symbols to be mapped is a predefined interval.

channelization processing is performed on indication information indicating the control channel ⟋ S 102

the processed indication information is sent to the user equipment ⟋ S 104

## Fig. 1

P2 RBs

k2 frequency domain starting positions

There are m2*P2 RBs in a sub-area, wherein m2 is equal to 2 as shown in the figure

## Fig. 2

The number of the bits of the information that demands to be filled, a certain fixed size

positions left after the information bits are filled

positions which are left are filled with 0

0 | 0 | 0 | 0 | 0 | 0

## Fig. 3

Data containing the indication information of the control information → encoding → The data is born on the logic resouce → Other channelization processing → Emission

## Fig. 4A

EP 2 747 306 A1

```
┌─────────────────┐   ┌──────────────┐   ┌──────────────┐   ┌──────────┐
│ Data containing │   │              │   │              │   │          │
│ the indication  │──▶│channelization│──▶│The data is   │──▶│ Emission │
│ information of  │   │  processing  │   │born on the   │   │          │
│the control info │   │              │   │physical res. │   │          │
└─────────────────┘   └──────────────┘   └──────────────┘   └──────────┘
```

## Fig. 4B

```
┌──────────────┐  ┌──────────────┐  ┌──────────────┐  ┌──────────────┐
│ indication   │  │channel coding│  │It is placed  │  │the data on   │
│information of│─▶│for error     │─▶│on the CCEs of│─▶│the CCEs is   │
│control chan. │  │correction    │  │the PDCCH     │  │Scrambled     │
└──────────────┘  └──────────────┘  └──────────────┘  └──────────────┘
                                                              │
                                                              ▼
                                                      ┌──────────────┐
                                                      │  Modulation  │
                                                      └──────────────┘
                                                              │
┌──────────┐  ┌──────────────┐  ┌──────────────┐  ┌──────────────┐
│          │  │The data on   │  │The data is   │  │              │
│ emission │◀─│antenna port  │◀─│mapped onto   │◀─│Layer mapping │
│          │  │mapped onto   │  │the antenna   │  │              │
│          │  │phys resource │  │port          │  │              │
└──────────┘  └──────────────┘  └──────────────┘  └──────────────┘
```

## Fig. 5

CCE sequence: 0 1 2 3 4 5 6 7 8 ... ... 33 34 35 36 37 38 39 40 41 42 43 44 45 46 47 48 49

Indication information is placed at the end of the CCE sequence

0 1 2 3 4 5 6 7 8 ... ... 33 34 35 36 37 38 39 40 41 42 43 44 45 46 47 ▧

Indication information is placed at the start of the CCE sequence

▧ 2 3 4 5 6 7 8 ... ... 33 34 35 36 37 38 39 40 41 42 43 44 45 46 47 48 49

Indication information is placed at predefined positions

0 1 2 3 4 5 6 7 8 ... ... 33 34 35 36 37 38 39 ▧ 42 43 44 45 46 47 48 49

## Fig. 6

19

indication information of the control channel → CRC is calculated according to the indication information of the control channel, and is attached to the indication information of the control channel → Channel coding for error correction is performed on the (Indication information Of the control channel+CRC) → It is placed on the CCEs of the PDCCH → the data on the CCEs is Scrambled → Modulation → Layer mapping → The data is mapped onto the antenna port → The data on the antenna port is mapped onto the physical resource → emission

**Fig. 7**

CCE
sequence | 0 | 1 | 2 | 3 | 4 | 5 | 6 | 7 | 8 | ... | ... | 33 | 34 | 35 | 36 | 37 | 38 | 39 | 40 | 41 | 42 | 43 | 44 | 45 | 46 | 47 | 48 | 49 |

Indication information is placed at
the end of the CCE sequence

| 0 | 1 | 2 | 3 | 4 | 5 | 6 | 7 | 8 | ... | ... | 33 | 34 | 35 | 36 | 37 | 38 | 39 | 40 | 41 | 42 | 43 | 44 | 45 | 46 | 47 | ▨ |

Indication information is placed at the
starting position of the CCE sequence

| ▨ | 2 | 3 | 4 | 5 | 6 | 7 | 8 | ... | ... | 33 | 34 | 35 | 36 | 37 | 38 | 39 | 40 | 41 | 42 | 43 | 44 | 45 | 46 | 47 | 48 | 49 |

Indication information is placed at a
predetermined position in the CCE sequence

| 0 | 1 | 2 | 3 | 4 | 5 | 6 | 7 | 8 | ... | ... | 33 | 34 | 35 | 36 | 37 | 38 | 39 | ▨ | 42 | 43 | 44 | 45 | 46 | 47 | 48 | 49 |

The position where the indication information is
placed is not fixed, and the indication information
is placed on one of several selectable positions

| 0 | 1 | 2 | 3 | 4 | 5 | 6 | 7 | 8 | ... | ... | 33 | 34 | 35 | 36 | 37 | ▨ | 40 | 41 | 42 | 43 | 44 | 45 | 46 | 47 | 48 | 49 |

| 34 | 35 | 36 | 37 | 38 | 39 | 40 | 41 | 42 | 43 |

Selectable positions which are
predefined, the selectable
positions here are 6

## Fig. 8

```
Other information
+ indication
information of the
control channel
```
→
```
CRC is calculated
according to (other
information+indica
tion information of
the control
channel), and is
attached to (other
information+indica
tion information of
the control
channel)
```
→
```
Channel coding for
error correction is
performed on (other
information+
indication
information of the
Control channel
+CRC)
```
→
```
It is placed on the
CCEs of the
PDCCH
```
↓
```
the data on the
CCEs is
Scrambled
```
↓
```
Modulation
```
↓

```
emmission
```
←
```
The data on the
antenna port is
mapped onto the
physical resource
```
←
```
The data is
mapped onto the
antenna port
```
←
```
Layer mapping
```

## Fig. 9

| ☒ CCE sequence | 0 | 1 | 2 | 3 | 4 | 5 | 6 | 7 | 8 | ... | ... | 33 | 34 | 35 | 36 | 37 | 38 | 39 | 40 | 41 | 42 | 43 | 44 | 45 | 46 | 47 | 48 | 49 |

Indication information is placed at
the end of the CCE sequence

| | 0 | 1 | 2 | 3 | 4 | 5 | 6 | 7 | 8 | ... | ... | 33 | 34 | 35 | 36 | 37 | 38 | 39 | 40 | 41 | 42 | 43 | 44 | 45 | 46 | 47 | //// |

Indication information is

| | 0 | 1 | 2 | 3 | 4 | 5 | 6 | 7 | 8 | ... | ... | 33 | 34 | 35 | 36 | 37 | 38 | 39 | 40 | 41 | 42 | 43 | 44 | 45 | 46 | 47 | 48 | 49 |

## Fig. 10

symbol to be mapped on the antenna port

Unit P of the symbol to be mapped

The unit Q of the mapped resource

The symbols to be mapped which are in a unit of P are mapped on the resource which is in a unit of Q

| 1 | //// | 3 | 4 | 5 | //// | 7 |

| 8 | 9 | //// | 11 | 12 | 13 | //// |

| 15 | 16 | 17 | //// | 19 | 20 | 21 |

| //// | 23 | 24 | 25 | //// | 27 | 28 |

## Fig. 11

Processing module
1201

Sending module
1202

**Fig. 12**

<div align="center">

**INTERNATIONAL SEARCH REPORT**

</div>

| International application No. |
| --- |
| **PCT/CN2011/084697** |

**A.　CLASSIFICATION OF SUBJECT MATTER**

H04B 7/26 (2006. 01) i

According to International Patent Classification (IPC) or to both national classification and IPC

**B.　FIELDS SEARCHED**

Minimum documentation searched (classification system followed by classification symbols)

IPC: H04L H04W H04B

Documentation searched other than minimum documentation to the extent that such documents are included in the fields searched

Electronic data base consulted during the international search (name of data base and, where practicable, search terms used)

CNTXT, CPRSABS, CNKI: control channel indication information physical downlink shared channel PDSCH send receive user terminal region resource

VEN, NPL, SIPOABS GOOGLE IEEE: control channel indicat+ information (physical w downlink w shared w channel) PDSCH send receiv+ user terminal area region resource

**C.　DOCUMENTS CONSIDERED TO BE RELEVANT**

| Category* | Citation of document, with indication, where appropriate, of the relevant passages | Relevant to claim No. |
| --- | --- | --- |
| P, X | CN 102263616 A (ZTE CORP.), 30 November 2011 (30.11.2011), claims 1-22 | 1-22 |
| A | CN 101714892 A (ZTE CORP.), 26 May 2010 (26.05.2010), the whole document | 1-22 |
| A | CN 101789823 A (ZTE CORP.), 28 July 2010 (28.07.2010), the whole document | 1-22 |
| A | WO 2011038644 A1 (ZTE CORP.), 07 April 2011 (07.04.2011), the whole document | 1-22 |
| A | CN 102123432 A (ACADEMY OF TELECOMMUNICATION TECHNOLOGY), 13 July 2011 (13.07.2011), the whole document | 1-22 |

☐ Further documents are listed in the continuation of Box C.　　☒ See patent family annex.

| | |
| --- | --- |
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
| --- | --- |
| **05 May 2012 (05.05.2012)** | **24 May 2012 (24.05.2012)** |

| Name and mailing address of the ISA/CN:<br>　State Intellectual Property Office of the P. R. China<br>　No. 6, Xitucheng Road, Jimenqiao<br>　Haidian District, Beijing 100088, China<br>　Facsimile No.: (86-10) 62019451 | Authorized officer<br><br>　　　　　**CHENG, Dong**<br><br>Telephone No.: (86-10) **62411276** |
| --- | --- |

Form PCT/ISA/210 (second sheet) (July 2009)

## INTERNATIONAL SEARCH REPORT
### Information on patent family members

International application No.

**PCT/CN2011/084697**

| Patent Documents referred in the Report | Publication Date | Patent Family | Publication Date |
|---|---|---|---|
| CN 102263616 A | 30.11.2011 | None | |
| CN 101714892 A | 26.05.2010 | WO 2010145620 A1 | 23.12.2010 |
| CN 101789823 A | 28.07.2010 | WO 2011097931 A1 | 18.08.2011 |
| WO 2011038644 A1 | 07.04.2011 | CN 102036171 A | 27.04.2011 |
| CN 102123432 A | 13.07.2011 | None | |

Form PCT/ISA/210 (patent family annex) (July 2009)